# EUROPEAN PATENT SPECIFICATION

(11) **EP 4 216 348 B1**
(45) Date of publication and mention of the grant of the patent: **13.08.2025**
(21) Application number: 23151573.5
(22) Date of filing: 13.01.2023
(51) Int. Cl.: H01M 50/184, H01M 50/186, H01M 50/545, H01M 50/55, H01M 50/567

(54) **SECONDARY BATTERY**
SEKUNDÄRBATTERIE
BATTERIE SECONDAIRE

(30) Priority: 19.01.2022 KR 20220007829
(43) Date of publication of application: 26.07.2023
(73) Proprietor: Samsung SDI Co., Ltd., Yongin-si, Gyeonggi-do 17084 (KR)
(72) Inventor: JUNG, Hyun Ki, 17084 Yongin-si (KR)
(74) Representative: Marks & Clerk LLP

(56) References cited:
- EP-A1- 4 047 702
- US-A1- 2004 023 107
- US-B1- 6 399 237

## Description

### BACKGROUND

### 1. Field

Aspects of embodiments of the present disclosure relate to a secondary battery.

### 2. Description of the Related Art

A secondary battery includes an electrode assembly, a case for accommodating the electrode assembly and an electrolyte, and a cap assembly coupled to an upper opening of the case to seal the case. The cap assembly is electrically connected to the electrode assembly to electrically connect an external structure (e.g., an external device) and the electrode assembly.

A cylindrical secondary battery generally has a structure in which a can having a negative polarity and a cap assembly having a positive polarity are insulated from each other by a gasket. In the case of a battery module including a plurality of cylindrical secondary batteries connected to each other, bus bars must be connected to the upper and lower portions of the secondary batteries, the structure and/or configuration of the battery module becomes complicated and the process time is prolonged.

The above information disclosed in this Background section is for enhancement of understanding of the background of the present disclosure, and therefore, it may contain information that does not constitute prior art.

US 6399237 B1 describes a cylindrical high-capacity sealed storage cell having a terminal at one end which is made of aluminum, wherein: the one end includes an aluminum cover adapted to be brought into contact with an external electrical connecting part by a clamping structure which is at least in part under the cover and co-operates with an external assembly mechanism, the clamping structure being made from a material selected from the group consisting of stainless steel, nickel-plated steel, copper, and brass; and the cover of the cell is sealed by a metal sealing cap under the cover.

US 20040023107 A1 describes a battery including an electrode unit housed in a battery can and which generates electricity which can be taken out of the battery via a pair of negative and positive electrode terminals, wherein a terminal assembly is installed in the battery, a current collector plate is connected to an edge of an electrode of the electrode unit for connecting the electrode unit to the terminal assembly, and one or more than one connecting piece which is protrusively formed on a surface of the current collector plate is welded and secured to a base portion of the terminal assembly.

### SUMMARY

Embodiments of the present disclosure provide a secondary battery which can be easily compressed with an insulating member due to a protrusion provided in a terminal hole in a case, thereby improving sealing force between the case and a terminal.

In addition, embodiments of the present disclosure provide a secondary battery in which both a negative electrode and a positive electrode are provided at the same side, and thus, when a plurality of secondary batteries are electrically connected through a bus bar, the secondary batteries are connected at only one side, thereby simplifying a bus bar connection structure.

A secondary battery according to the present disclosure, is as defined in claim 1.

The terminal may include a head outside the case and a fastening part coupled to an inner surface of the case through the terminal hole in the case.

The fastening part may have a larger diameter than the terminal hole in the case.

The insulation member may have a diameter gradually increasing toward the inside of the case according to a shape of the fastening part in a region where the terminal is inserted into the inside of the case.

The protrusion may protrude toward the inside or the outside of the case.

The secondary battery may further include an insulation member between the terminal and the case. The insulation member may be coupled around an outer peripheral surface of the protrusion.

The protrusion may be compressed with the insulation member according to a shape of the terminal on the outside of the insulation member.

The terminal may have an electrical polarity different from that of the case.

At least some of the above and other features of the invention are set out in the claims.

### BRIEF DESCRIPTION OF DRAWINGS

FIG. 1 is a perspective view illustrating a secondary battery according to an embodiment of the present disclosure.
FIG. 2 is a cross-sectional view of the secondary battery shown in FIG. 1.
FIG. 3 is a partially exploded cross-sectional view of the portion 3 in FIG. 2.
FIGS. 4A and 4B are schematic views illustrating a case shown in FIG. 2.

### DETAILED DESCRIPTION

Hereinafter, an embodiment of the present disclosure will be described in detail with reference to the accompanying drawings.

Embodiments of the present disclosure are provided to more completely explain the present disclosure to those skilled in the art, and the following embodiments may be modified in various other forms. The present disclosure, however, may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

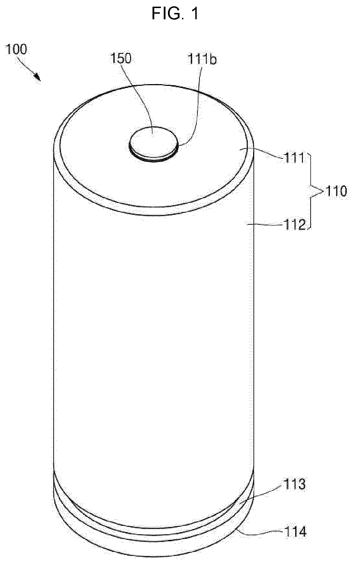

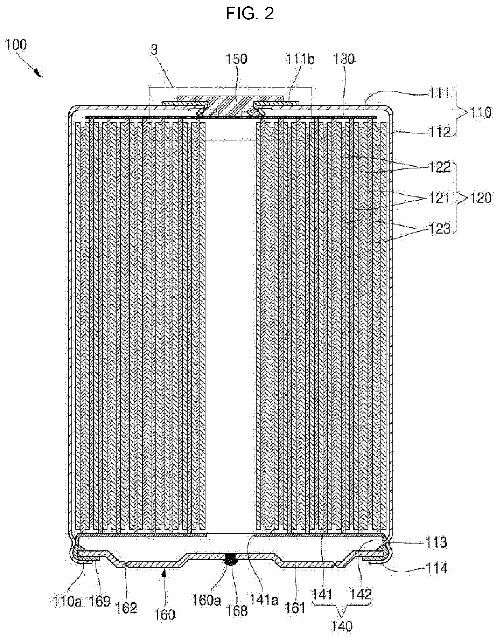

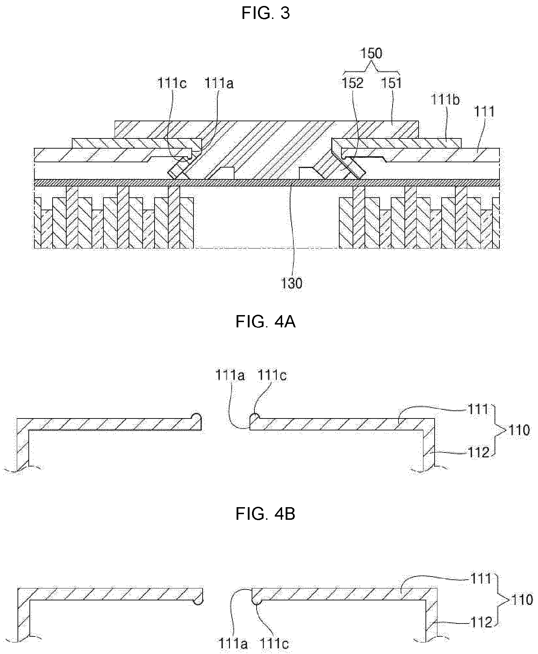

FIG. 1 is a perspective view illustrating a secondary battery 100 according to an embodiment of the present disclosure, FIG. 2 is a cross-sectional view of the secondary battery 100 shown in FIG. 1, and FIG. 3 is a partially exploded cross-sectional view of the portion 3 in FIG. 2.

As shown in FIGS. 1 to 3, the secondary battery 100 may include a case (e.g., a can) 110, an electrode assembly 120 accommodated in the case 110, a terminal 150 coupled at a terminal hole (e.g., a terminal opening) 111a in one end of the case 110, and a cap plate 160 sealing an opening 110a in another end (e.g., an opposite end) of the case 110.

The case 110 has a circular upper surface portion 111 and a side portion 112 extending a length (e.g., a predetermined length) downwardly from the edge of the upper surface portion 111. The upper surface portion 111 and the side portion 112 of the case 110 may be formed integrally. An opening 110a may be provided in a lower portion (e.g., at a lower end) of the case 110. Hereinafter, for convenience of description, the case 110 will be shown and described as having the upper surface portion 111 and the side portion 112 and having the opening 110a formed at the lower portion thereof. However, in the case 110, the position of the opening 110a may vary in various manners by rotation. For example, the case 110 may have the opening 110a at the upper portion thereof and may have an upper surface portion 111 formed at the lower portion with the side portion 112 extending upwardly therefrom. In addition, in a side-lying arrangement, the upper surface portion 111 may face one side and the opening 110a may face the other side. The case 110 may have the opening 110a at one end thereof, and a terminal hole 111a may be provided in a surface opposite to the opening 110a.

The circular upper surface portion 111 may have a flat circular plate shape and may have a terminal hole (e.g., a terminal opening) 111a penetrating the center thereof. In addition, a protrusion 111c may be provided on the upper surface portion 111 to face (e.g., to protrude toward) the inside or the outside of the case 110 along the edge of the terminal hole 111a. The protrusion 111c may protrude upwardly from the upper surface of the upper surface portion 111 or may protrude downwardly from the lower surface of the upper surface portion 111. The protrusion 111c may be shaped to correspond to the terminal hole 111a. For example, the protrusion 111c may have a circular ring shape corresponding to the shape of the terminal hole 111a and may protrude toward the inside or outside of the case 110. The protrusion 111c may be formed when processing (e.g., forming) the terminal hole 111a in the case 110. The terminal hole 111a may be formed by processing through a piercing punch of a press mold.

As an embodiment, as shown in FIG. 4A, when the terminal hole 111a is formed by processing from the inside to the outside of the case 110, the protrusion 111c may be formed in the outward direction of (or from) the case 110. As another embodiment, as shown in FIG. 4B, when the terminal hole 111a is formed by machining from the outside to the inside of the case 110, the protrusion 111c may be formed in the inward direction of the case 110. The terminal 150 may be inserted and coupled at the terminal hole 111a in the case 160 as described above. In addition, an insulation member 111b for sealing and electrical insulation may be interposed between the terminal hole 111a and the terminal 150.

The insulation member 111b may prevent contact between the terminal 150 and the case 110 and, thus, the terminal 150 and the case 110 may be electrically separated (or electrically isolated). The terminal hole 111a in the case 110 may be sealed by the insulation member 111b. The insulation member 111b may be made of a resin material, such as polyethylene (PE), polypropylene (PP), or polyethylene terephthalate (PET).

In the secondary battery 100, the electrode assembly 120 may be inserted into the case 110 through the opening 110a in the case 110 during a manufacturing process. The electrode assembly 120 may be inserted into the case 110 while the opening 110a faces upwardly. After the electrode assembly 120 is inserted into the case 110, the cap plate 160 may be coupled to the opening 110a to seal the inside of the case 110.

The case 110 may be made of steel, a steel alloy, aluminium, an aluminium alloy, or an equivalent thereof, but the material thereof is not limited thereto. In addition, to prevent the electrode assembly 120 from being separated to the outside, the case 110 may have a beading part (e.g., a bead) 113 inwardly recessed at the upper side and a crimping part (e.g., a crimped end) 114 inwardly bent at the lower side with respect to the cap plate 160.

After the electrode assembly 120 is inserted through the opening 110a at the lower side of the case 110, the beading part 113 may prevent the electrode assembly 120 from being separated from the case 110.

The electrode assembly 120 may include a first electrode plate 121, a second electrode plate 122, and a separator 123. The first electrode plate 121 may be a positive electrode plate, and the second electrode plate 122 may be a negative electrode plate. In other embodiments, however, the reverse is possible. Hereinafter, for convenience of description, an embodiment in which the first electrode plate 121 is a positive electrode plate and the second electrode plate 122 is a negative electrode plate will be described.

The first electrode plate 121 may have a positive electrode active material, made of a transition metal oxide, coated on at least one surface of a plate-shaped metal foil, made of, for example, aluminium (Al). In addition, the first electrode plate 121 may have a positive electrode uncoated portion, on which the positive electrode active material is not coated, at an upper end thereof. The positive electrode uncoated portion may protrude upwardly from the electrode assembly 120. For example, the positive electrode uncoated portion of the first electrode plate 121 may protrude upwardly above the second electrode plate 122 and the separator 123.

The second electrode plate 122 may have a negative electrode active material, made of graphite or carbon, coated on at least one surface of a plate-shaped metal foil, made of, for example, copper (Cu) or nickel (Ni). In addition, the second electrode plate 122 may have a negative electrode uncoated portion, on which the negative electrode active material is not coated, at a lower end thereof. The negative electrode uncoated portion may protrude downwardly from the electrode assembly 120. For example, the second electrode plate 122 may protrude downwardly below than the first electrode plate 121 and the separator 123.

The separator 123 may be made of polyethylene (PE) or polypropylene (PP), but the present disclosure is not limited thereto. The separator 123 may prevent an electric short between the first electrode plate 121 and the second electrode plate 122 while allowing lithium ions to move therebetween.

After the first electrode plate 121, the second electrode plate 122, and the separator 123 are stacked, the electrode assembly 120 is wound from (or about) a winding tip to have a substantially cylindrical shape. In the electrode assembly 120, the positive electrode uncoated portion may upwardly protrude from the first electrode plate 121 and the negative electrode uncoated portion may downwardly protrude from the second electrode plate 122.

The first current collector plate 130 may be a circular metal plate shaped to correspond to the upper surface of the electrode assembly 120. The planar size of the first current collector plate 130 may be the same as or smaller than the size (e.g., the planar size or surface area) of the upper surface of the electrode assembly 120. The first current collector plate 130 may be made of aluminium (Al). The first current collector plate 130 may be fixed and electrically connected to the first electrode plate 121, which is exposed at the upper portion of the electrode assembly 120, by welding when the lower surface of the first current collector plate 130 is in contact with the upper surface of the electrode assembly 120. The first current collector plate 130 acts as a passage for current flow between the first electrode plate 121 of the electrode assembly 120 and the terminal 150.

The second current collector plate 140 may have a circular flat portion 141 corresponding to the lower surface of the electrode assembly 120 and an extending portion 142 extending downwardly from the edge of the flat portion 141. The upper surface of the flat portion 141 may be in contact with the lower surface of the electrode assembly 120. The upper surface of the flat portion 141 may be fixed and electrically connected to the second electrode plate 122, which is exposed at the lower portion of the electrode assembly 120, by welding while in contact with the lower surface of the electrode assembly 120.

The extending portion 142 may extend downwardly from the edge of the flat portion 141. The extending portion 142 may be in contact with and coupled to (e.g., fixed by) the beading part 113 of the case 110. In an embodiment, the extending portion 142 may be coupled to the beading part 113 of the case 110 by welding while being in contact with the inner surface of the beading part 113 of the case 110. In addition, a plurality of extending portions 142 may be spaced apart from each other along the edge of the flat portion 141. The second current collector plate 140 may act as a passage for current flow between the second electrode plate 122 of the electrode assembly 120 and the case 110. That is, the case 110 may be a negative electrode terminal.

The terminal 150 may be inserted into the terminal hole 111a provided in the upper surface portion 111 of the case 110 to be electrically connected to the first current collector plate 130. For example, the terminal 150 may be a positive electrode terminal. The terminal 150 and the case 110 may have different polarities. The terminal 150 may be made of the same or similar material as the first current collector plate 130 and the first electrode plate 121. A diameter of a portion of the terminal 150 exposed to (e.g., above) the upper portion of the case 110 and a diameter of a portion of the terminal 150 positioned inside the case 110 may be larger than a diameter of a portion of the terminal 150 positioned in the terminal hole 111a.

The terminal 150 may have a head 151 at a portion exposed to the upper portion of the case 110 and a fastening part 152 at a portion facing the electrode assembly 120 while being positioned inside the case 110. The terminal 150 may be coupled at the terminal hole 111a in the case 110 from the outside to the inside. The head 151 may be outside the case 110. In addition, the fastening part 152 may be compression-deformed (e.g., compression-molded) by riveting to be compressed while the insulation member 111b is interposed at the lower portion of the upper surface portion 111. The fastening part 152 may have a diameter gradually increasing from the terminal hole 111a toward the inner side of (e.g., toward the inside of) the case 110. In addition, the head 151 may be in close contact with the upper surface of the upper surface portion 111 with the insulation member 111b interposed therebetween.

The protrusion 111c provided in the case 110 may compress the insulation member 111b when the terminal 150 is coupled to the terminal hole 111a. For example, because the protrusion 111c presses the insulation member 111b, the bonding strength between the insulation member 111b and the case 110 can be improved and sealing can be facilitated. The insulation member 111b may wrap (e.g., may extend around) the outer peripheral surface of the protrusion 111c of the case 110. The case 110 and the terminal 150 may be coupled by being pressed while the insulation member 111b is interposed therebetween. The insulation member 111b may prevent contact between the terminal 150 and the case 110, which may have different polarities, and thus, the terminals 150 and the case 110 may be electrically separated from each other. In addition, the insulation member 111b may seal between the terminal hole 111a in the case 110 and the terminal 150.

The cap plate 160 is a circular metal plate and may be coupled at the opening 110a in the case 110. The cap plate 160 may be coupled at the opening 110a in the case 110 while a gasket 169 is interposed therebetween, thereby preventing the cap plate 160 from being electrically connected to the case 110. The cap plate 160 is not electrically connected to the positive electrode or the negative electrode of the electrode assembly 120 and, thus, may not have any separate electrical polarity.

The cap plate 160 may be fixed while the edge of the cap plate 160 is positioned between the beading part 113 of the case 110 and the crimping part 114. For example, the gasket 169 is interposed between the beading part 113 of the case 110 and the cap plate 160. Thereafter, the crimping part 114 of the case 110 may be inwardly bent from the cap plate 160 to press the gasket 169, thereby coupling the cap plate 160 and the case 110 to each other.

The cap plate 160 may have at least one protrusion 161 that protrudes downwardly. In an embodiment, the protrusion 161 of the cap plate 160 may be spaced apart from (e.g., may be offset from) the center thereof and may protrude downwardly to have a planar ring shape. In another embodiment, the protrusion 161 of the cap plate 160 may protrude downwardly to have a plurality of patterns. By including the protrusion 161, the cap plate 160 may support (e.g., contain) the internal pressure of the case 110 (e.g., the cap plate 160 may be corrugated to increase its strength). In addition, the lower surface of the protrusion 161 of the cap plate 160 may be lower than (e.g., may protrude beyond) the lower surface of the crimping part 114 of the case 110. Therefore, when the secondary battery 100 is placed on a flat surface, the protrusion 161 of the cap plate 160 may be in contact with one surface while the crimping part 114 of the case 110 may is spaced apart from the one surface. The cap plate 160 may have unevenness by the protrusions 161, and thus, can better withstand the internal pressure even when the internal pressure of the case 110 increases.

A safety vent 162 may be formed in the cap plate 160 and may be configured to open (e.g., rupture) at a set pressure. The safety vent 162 may be a region of the cap plate 160 having a smaller thickness than other regions of the cap plate 160. When the internal pressure in the case 110 is equal to or greater than the breaking (or rupture) pressure of the safety vent 162, the safety vent 162 is broken (e.g., ruptures or bursts) to prevent the secondary battery 100 from exploding. For example, when excessive internal pressure is generated inside the case 110, the safety vent 162 may be broken to discharge the internal excessive internal pressure. The safety vent 162 of the cap plate 160 may have a planar ring shape on (or along) the protrusion 161. In another embodiment, the safety vent 162 may be formed of a plurality of patterns. However, the shape of the safety vent 162 is not limited in the present disclosure.

An electrolyte injection hole (e.g., an electrolyte injection opening) 160a may be provided in an approximate center of the cap plate 160. The electrolyte injection hole 160a may be sealed by a stopper 168 after the electrolyte is injected into the case 110. The electrolyte allows lithium ions to move between the first electrode plate 121 and the second electrode plate 122. The electrolyte may be a non-aqueous organic electrolyte that is a mixture of a lithium salt and a high-purity organic solvent. In addition, the electrolyte may be a polymer using (or including) a polymer electrolyte or a solid electrolyte, but the type of the electrolyte is not limited herein. The second current collector plate 140 may include a through hole provided in approximately the center thereof, and the electrolyte injected through the electrolyte injection hole 160a in the cap plate 160 may easily move to the electrode assembly 120 through the through hole in the second current collector plate 140.

The gasket 169 may be made of a resin material, such as polyethylene (PE), polypropylene (PP), polyethylene terephthalate (PET), or the like. The cap plate 160 may be sealed to the case 110 by pressing the gasket 169 therebetween and may prevent the cap plate 160 from being separated from the case 110.

Because the secondary battery 100 includes both a negative electrode terminal and a positive electrode terminal at the upper surface thereof, when a plurality of secondary batteries 100 are electrically connected through a bus bar, the secondary batteries 100 may be connected at only the upper surface, thereby simplifying a bus bar connection structure.

As described above, in the secondary battery according to embodiments of the present disclosure, an insulating member arranged in a terminal hole in a case can be easily compressed, thereby improving sealing force between the case and a terminal in the terminal hole.

Embodiments of the present disclosure provide a secondary battery in which both a negative electrode (e.g., a negative electrode terminal) and a positive electrode (e.g., a positive electrode terminal) are provided on the same side of the secondary battery, and thus, when a plurality of secondary batteries are electrically connected through a bus bar, the secondary batteries may be connected at only one side, thereby simplifying a bus bar connection structure.

## Claims

1. A secondary battery comprising:
an electrode assembly (120);
a case (110) accommodating the electrode assembly (120), the case having an opening (110a) at a first end sized to accommodate the electrode assembly (120) and a terminal hole (111a) at a second end opposite to the first end;
a first current collector plate (130) coupled to the electrode assembly (120);
a terminal (150) electrically coupled to the first current collector plate (130) and extending through the terminal hole (111a) in the case (110); and
a cap plate (160) sealing the opening of the case (110); and
an insulation member (111b) between the terminal (150) and the case (110),
wherein the case (110) comprises a protrusion (111c) that protrudes in one direction along an edge of the terminal hole, towards the inside of the case (110) or towards the outside of the case (110), and
wherein the insulation member (111b) is coupled around an outer peripheral surface of the protrusion (111c).

2. The secondary battery of claim 1, wherein the terminal (150) comprises a head (151) outside the case (110) and a fastening part (152) coupled to an inner surface of the case (110) through the terminal hole (111a) in the case (110).

3. The secondary battery of claim 2, wherein the fastening part (152) has a larger diameter than the terminal hole (111a) in the case (110).

4. The secondary battery of claim 1 to claim 3, wherein the insulation member (111b) has a diameter gradually increasing toward the inside of the case (110) according to a shape of the fastening part (152) in a region where the terminal (150) is inserted into the inside of the case (110).

5. The secondary battery of claim 1 to claim 4, wherein the protrusion (111c) is arranged to compress the insulation member (111b) according to a shape of the terminal (150) on the other side of the insulation member (111b).

6. The secondary battery of any of claim 1 to claim 5, wherein the terminal (150) has an electrical polarity different from that of the case (110).

## Patentansprüche

1. Sekundärbatterie, umfassend:
eine Elektrodenanordnung (120);
ein Gehäuse (110), das die Elektrodenanordnung (120) unterbringt, wobei das Gehäuse eine Öffnung (110a) an einem ersten Ende, das so bemessen ist, dass es die Elektrodenanordnung (120) aufnimmt, und ein Anschlussloch (111a) an einem zweiten Ende gegenüber dem ersten Ende aufweist;
eine erste Stromabnehmerplatte (130), die mit der Elektrodenanordnung gekoppelt ist (120);
einen Anschluss (150), der elektrisch mit der ersten Stromabnehmerplatte (130) gekoppelt ist und sich durch das Anschlussloch (111a) im Gehäuse (110) erstreckt; und
eine Abdeckplatte (160), die die Öffnung des Gehäuses (110) abdichtet; und
ein Isolierelement (111b) zwischen dem Anschluss (150) und dem Gehäuse (110),
wobei das Gehäuse (110) einen Vorsprung (111c) umfasst, der in einer Richtung entlang einer Kante des Anschlusslochs in Richtung des Inneren des Gehäuses (110) oder in Richtung des Äußeren des Gehäuses (110) vorspringt, und
wobei das Isolierelement (111b) um eine Außenumfangsfläche des Vorsprungs (111c) herum gekoppelt ist.

2. Sekundärbatterie nach Anspruch 1, wobei der Anschluss (150) einen Kopf (151) außerhalb des Gehäuses (110) und ein Befestigungsteil (152) umfasst, das durch das Anschlussloch (111a) im Gehäuse (110) mit einer Innenfläche des Gehäuses (110) gekoppelt ist.

3. Sekundärbatterie nach Anspruch 2, wobei das Befestigungsteil (152) einen größeren Durchmesser als das Anschlussloch (111a) im Gehäuse (110) aufweist.

4. Sekundärbatterie nach Anspruch 1 bis Anspruch 3, wobei das Isolierelement (111b) einen Durchmesser aufweist, der zur Innenseite des Gehäuses (110) hin allmählich zunimmt gemäß einer Form des Befestigungsteils (152) in einem Bereich, in dem der Anschluss (150) in das Innere des Gehäuses (110) eingeführt ist.

5. Sekundärbatterie nach Anspruch 1 bis Anspruch 4, wobei der Vorsprung (111c) angeordnet ist, um das Isolierelement (111b) gemäß einer Form des Anschlusses (150) auf der anderen Seite des Isolierelements (111b) zusammenzudrücken.

6. Sekundärbatterie nach einem der Ansprüche 1 bis 5, wobei der Anschluss (150) eine elektrische Polarität, die sich von der des Gehäuses (110) unterscheidet, aufweist.

## Revendications

1. Batterie secondaire comprenant :
un ensemble d'électrodes (120),
un boîtier (110) logeant l'ensemble d'électrodes (120), le boîtier comportant une ouverture (110a) à une première extrémité dimensionnée pour recevoir l'ensemble d'électrodes (120) et un trou de borne (111a) à une deuxième extrémité opposée à la première extrémité,
une première plaque collectrice de courant (130) couplée à l'ensemble d'électrodes (120),
une borne (150) couplée électriquement à la première plaque collectrice de courant (130) et s'étendant à travers le trou de borne (111a) dans le boîtier (110), et
une plaque de capuchon (160) scellant l'ouverture du boîtier (110), et
un élément isolant (111b) entre la borne (150) et le boîtier (110),
dans laquelle le boîtier (110) comprend une saillie (111c) qui fait saillie dans une direction le long d'un bord du trou de borne, vers l'intérieur du boîtier (110) ou vers l'extérieur du boîtier (110), et
dans laquelle l'élément isolant (111b) est couplé autour d'une surface périphérique extérieure de la saillie (111c).

2. Batterie secondaire selon la revendication 1, dans laquelle la borne (150) comprend une tête (151) à l'extérieur du boîtier (110) et une partie de fixation (152) couplée à une surface intérieure du boîtier (110) à travers le trou de borne (111a) dans le boîtier (110).

3. Batterie secondaire selon la revendication 2, dans laquelle la partie de fixation (152) a un diamètre supérieur au trou de borne (111a) dans le boîtier (110).

4. Batterie secondaire selon la revendication 1 à la revendication 3, dans laquelle l'élément isolant (111b) a un diamètre qui augmente progressivement vers l'intérieur du boîtier (110) conformément à une forme de la partie de fixation (152) dans une région où la borne (150) est insérée dans l'intérieur du boîtier (110).

5. Batterie secondaire selon la revendication 1 à la revendication 4, dans laquelle la saillie (111c) est agencée pour comprimer l'élément isolant (111b) conformément à une forme de la borne (150) sur l'autre côté de l'élément isolant (111b).

6. Batterie secondaire selon l'une quelconque des revendications 1 à 5, dans laquelle la borne (150) a une polarité électrique différente de celle du boîtier (110).
